# EUROPÄISCHE PATENTSCHRIFT

(11) **EP 1 022 540 B1**
(45) Veröffentlichungstag und Bekanntmachung des Hinweises auf die Patenterteilung: **24.11.2004**
(21) Anmeldenummer: 00101401.8
(22) Anmeldetag: 25.01.2000
(51) Int. Cl.: G01B 11/24, G01B 11/30, G01B 9/02

(54) **Messeinheit**
Measurement unit
Unité de mesure

(30) Priorität: 25.01.1999 DE 19902783
(43) Veröffentlichungstag der Anmeldung: 26.07.2000
(73) Patentinhaber: Dantec Ettemeyer GmbH, 89275 Elchingen (DE)
(72) Erfinder: Ettemeyer, Andreas, Dr., 89231 Neu-Ulm (DE)
(74) Vertreter: Alber, Norbert, Dipl.-Ing.

(56) Entgegenhaltungen:
- WO-A-98/35203
- US-A- 4 352 565
- US-A- 5 329 356
- US-A- 5 479 828

## Beschreibung

Die Erfindung betrifft eine Meßeinheit zur optischen Beobachtung eines Objektes, sowie ein Verfahren zur Herstellung eines Teils der Meßeinheit.

Es ist bekannt, z. B. nach dem Verfahren der Speckle-Interferometrie, die Oberfläche eines Objektes zu beobachten, also abzutasten, und mit Hilfe einer geeigneten Auswertung deren Formveränderung oder absolute Formgebung zu bestimmen.

Zu diesem Zweck wird die Oberfläche des Objektes mit Licht einer bestimmten Eigenschaft, z. B. einer bestimmten Wellenlänge und/oder einer bestimmten Polarisierung, insbesondere mit Laserlicht, bestrahlt, und das von der Oberfläche reflektierte Licht auf einer lichtempfindlichen Fläche, beispielsweise einem CCD-Sensor, registriert.

Dadurch, daß dem vom Objekt reflektierten Objektstrahl ein ohne Objektberührung direkt auf die lichtempfindliche Fläche geleiteter Referenzstrahl, dessen Laufwegslänge beziehungsweise Phasenlage beim Auftreffen auf die lichtempfindliche Fläche ohne Zustandsänderung des Objektes immer gleich ist, überlagert wird, lassen sich Veränderungen der Objektoberfläche feststellen. Durch unterschiedliche Bestrahlungsrichtungen, für die vorzugsweise Licht mit unterschiedlichen Eigenschaften, z. B. unterschiedlichen Wellenlängen, gewählt wird, ist es möglich, Formveränderungen beziehungsweise die Formgebung dreidimensional zu ermitteln.

Dabei besteht in der Praxis das Problem, daß die erfaßbare Meßfläche relativ klein ist, zumindest wenn eine hohe Auflösung gewünscht wird, oder daß an einem großen zu untersuchenden Objekt eine Vielzahl von Meßstellen vermessen werden soll. Daraus ergibt sich die Notwendigkeit, die Meßeinheit an unterschiedlichen Stellen des Meßobjektes anzubringen.

Aus diesem Grunde ist es bereits bekannt, die Meßeinheit aufzuteilen in eine Basiseinheit, in welcher die wenigstens eine Lichtquelle und gegebenenfalls Strahlteiler sowie die elektronische Auswerteeinheit untergebracht sind, und einen hiervon getrennt handhabbaren Meßkopf, der in die richtige Relativlage zum Objekt gebracht werden muß, und insbesondere mittels Abstandshaltern, sogenannten Füßen, direkt auf der Oberfläche des Meßobjektes aufgesetzt und dort befestigt wird.

Der Meßkopf enthält dazu zum einen die lichtempfindliche Fläche, die die vom Objekt reflektierten Objektstrahlen aufzeichnet, sowie die Beleuchtungseinrichtungen, die diese Objektstrahlen gegen das Meßobjekt ausstrahlen.

Basiseinheit und Meßkopf sind einerseits über Lichtleitkabel miteinander verbunden, über welche das durch die Lichtquelle in der Basiseinheit erzeugte Licht zu dem Meßkopf und den dort vorhandenen Beleuchtungseinrichtungen transportiert wird. Weiterhin besteht eine elektrische Verbindung zwischen der lichtempfindlichen Fläche, die sich im Meßkopf befindet, und der Auswerteeinheit, die sich in der Basiseinheit befindet.

Der Vorteil besteht darin, daß entsprechend der Länge der Lichtleitkabel sowie des elektrischen Kabels die Basiseinheit in der Nähe des Meßobjektes stationär aufgestellt werden kann, und nur der Meßkopf entlang des Objektes bewegt werden muß bzw. versetzt werden kann.

Als Lichtleitkabel werden dabei in der Regel Glasfaserkabel verwendet.

Es besteht daher die Aufgabe gemäß der vorliegenden Erfindung, eine Meßeinrichtung zu schaffen, die unabhängig von einer Bewegung oder Verbiegung der die Basiseinheit und den Meßkopf verbindenden Elemente zuverlässig funktioniert und möglichst kostengünstig herstellbar sein soll.

Bei Lichtleitkabeln, insbesondere Glasfaserkabeln, sind polarisationserhaltende Kabel, welche also eine dem eintretenden Licht aufgeprägte Polarisierung unverändert weitergeben, von nicht-polarisationserhaltenden Lichtleitkabeln zu unterscheiden.

Die nicht-polarisationserhaltenden Kabel haben jedoch den Nachteil, daß bei Bewegung oder Veränderung ihrer Biegung während des Hindurchsendens von Licht dessen Laufwegslänge durch Veränderung der Innenreflexion leicht verändert wird und damit die Phasenlage des aus dem Lichtleitkabel austretenden Lichtes. In einem anschliessenden Strahlteiler würde dies auch das Verhältnis der beiden aufgeteilten Teil-Strahlen beeinflussen.

Aus diesem Grunde werden als Lichtleitkabel zwischen Basiseinheit und Meßkopf polarisations-erhaltende Lichtleitkabel verwendet.

Innerhalb des Meßkopfes jedoch, also dort, wo die Lichtleitkabel gegenüber dem Gehäuse des Meßkopfes leicht in ihrer Lage fixiert, und damit Lageveränderungen vermieden werden können, wird von polarisationserhaltenden auf nicht-polarisationserhaltende Lichtleitkabel übergegangen. Als Verbindungselement wird in der Regel ein sogenannter Splicer verwendet, der die eine oder mehreren Adern des polarisations-erhaltenden mit denen des nicht polarisations-erhaltende Lichtleitkabels miteinander verspleisst. Erst - in Lichtdurchflußrichtung - nach dem Übergang auf die polarisationserhaltenden Lichtleitkabel und damit ebenfalls wiederum innerhalb des Meßkopfes wird die Aufteilung des Lichtleitkabels in zwei Teilstrahlen, insbesondere in zwei Teil-Lichtleitkabel, nämlich für den Objektstrahl einerseits und den Referenzstrahl andererseits mit Hilfe eines Kabelteilers bei jedem Kabel vorgenommen. Vorzugsweise wird dabei 20 % des Querschnittes des Kabels für den Referenzstrahl und 80 % für den Objektstrahl benutzt. Dies würde gerade bei den einadrigen Lichtleitkabeln der nicht-polarisationserhaltende Art nur schwer zu verwirklichen sein.

Dabei ist es zur Vereinfachung des optischen Aufbaues sinnvoll, die unterschiedlichen Objektstrahlen und deren Reflektierungen ein- und demselben, gemeinsamen Referenzstrahl gegenüberzustellen. Zu diesem Zweck werden die Referenz-Teilkabel jedes der Lichtleitkabel zusammengeführt zu dem Zweck, einen einheitlichen Referenzstrahl am freien Ende auszusenden, der insofern homogen sein soll, als er ein- und dieselben optischen Eigenschaften (z. B. Wellenlänge) besitzt.

Zu diesem Zweck müssen die Referenz-Teilkabel spätestens im Bereich unmittelbar vor dem freien Ende der Kabel, also dem Lichtaustritt, absolut parallel geführt und in dieser Parallellage auch fixiert sein und zusätzlich müssen die Referenz-Teilkabel so eng wie möglich seitlich nebeneinander geführt werden, um alle Referenz-Teilstrahlen mittels ein- und derselben Optik auf die lichtempfindliche Fläche leiten zu können.

In der Praxis wird dies dadurch gelöst, daß die Referenz-Teilkabel nicht nur parallel zueinander gelegt und fixiert werden, sondern daß das Fixieren vorzugsweise durch Vergießen in einem Kunststoff erfolgt, und diese Fixierung bzw. Ver gießung unter aufgebrachter leichter Vorspannung (damit keine Verwerfungen auftreten) auf die Referenz-Teilkabel in Kabellängsrichtung geschieht. Durch diese leichte Vorspannung und gleichzeitiges leichtes Gegeneinanderdrücken ist sichergestellt, daß die Referenz-Teilkabel in diesem Bereich absolut parallel zueinander liegen, und durch das Gegeneinanderdrücken ist auch der minimal mögliche Abstand erreichbar.

Vorzugsweise erfolgt anstelle oder zusätzlich zum Verguß das Umhüllen des durch die Referenz-Teilkabel gebildeten Referenz-Gesamtkabels mittels einer rohrförmigen Hülse.

Diese Hülse wird entweder zusammengedrückt, also radial nach innen gegen die Fasern des Referenzkabels, oder der Innendurchmesser der Hülse wird durch Vergußmasse ausgefüllt oder der Innendurchmesser der Hülse ist im Endzustand kleiner als der Außendurchmesser des Referenz-Gesamtkabels, z.B. durch selbständige Durchmesserverringerung des Innendurchmessers der Hülse (wie etwa bei einem Schrumpfschlauch, ähnliche Effekte sind auch bei Metallhülsen machbar).

Durch die Verwendung von polarisationserhaltenden Lichtleitkabeln zwischen Basiseinheit und Meßkopf wird unabhängig von der Lage oder momentanen Biegung der Lichtleitkabel zwischen beiden Einheiten eine Vermessung ermöglicht. Durch den Übergang auf nicht-polarisationserhaltende Lichtleitkabel erst innerhalb des Meßkopfes und das erst anschließende Aufspalten in Objektteilkabel und Referenz-Teilkabel ist die Verwendung von billigen und einfachen Kabelteilern für nicht-polarisationserhaltende Lichtleitkabel möglich. Die entsprechenden Bauteile für polarisationserhaltende Lichtleitkabel sind bisher noch kaum verfügbar und teuer sowie wenig zuverlässig. Die feste Fixierung der nicht-polarisationserhaltenden Lichtleitkabel innerhalb des Meßkopfes, insbesondere gegenüber dessen Gehäuse, bereitet keine Probleme.

Durch die Bündelung der Referenz-Teilkabel zu einem einzigen Referenzkabel, dessen Teile absolut parallel und minimal nahe beabstandet im Lichtaustrittsbereich verlaufen, kann die Auswertung aller Objektstrahlen bezüglich nur eines einzigen immer gleichen Referenzstrahles erfolgen. Der Aufbau und die Auswertung kann zusätzlich vereinfacht werden, wenn jede der Beleuchtungseinheiten des Meßkopfes durch einen separaten Laser mit jeweils unterschiedlicher Wellenlänge, die innerhalb der Basiseinheit angeordnet werden, gespeist wird. Insbesondere ist dann die Unterbrechung des jeweiligen Laserstrahles durch einen einfachen Shutter, also eine Blende, möglich, die von der Auswerteeinheit gesteuert werden kann, so daß zeitlich nacheinander die einzelnen Laser, also die aus den unterschiedlichen Beobachtungsrichtungen das Objekt bestrahlenden Beleuchtungseinheiten, zum Einsatz gebracht werden können.

Für eine dreidimensionale Beobachtung sind dabei insbesondere drei Beleuchtungseinrichtungen und somit drei Leuchtquellen, also Laserdioden erforderlich, oder eine Laserdiode und entsprechend viele Strahlenteiler.

In einer bevorzugten Ausführungsform werden jedoch vier Beleuchtungseinrichtungen mit unterschiedlichen Beleuchtungsrichtungen und dementsprechend vier Lichtquellen, also vier Laser, verwendet. Die dadurch theoretisch vorhandene Überbestimmung des Systems, insbesondere des bei der Auswertung zu lösenden Gleichungssystems (drei Gleichungen mit drei Unbekannten), wird in der Praxis dazu benutzt, um Signalverfälschungen, Rauschen etc. zu unterdrücken und als Signalverfälschung zu identifizieren.

Eine Ausführungsform gemäß der Erfindung ist im folgenden anhand der Figuren beispielhaft näher beschrieben. Es zeigen:

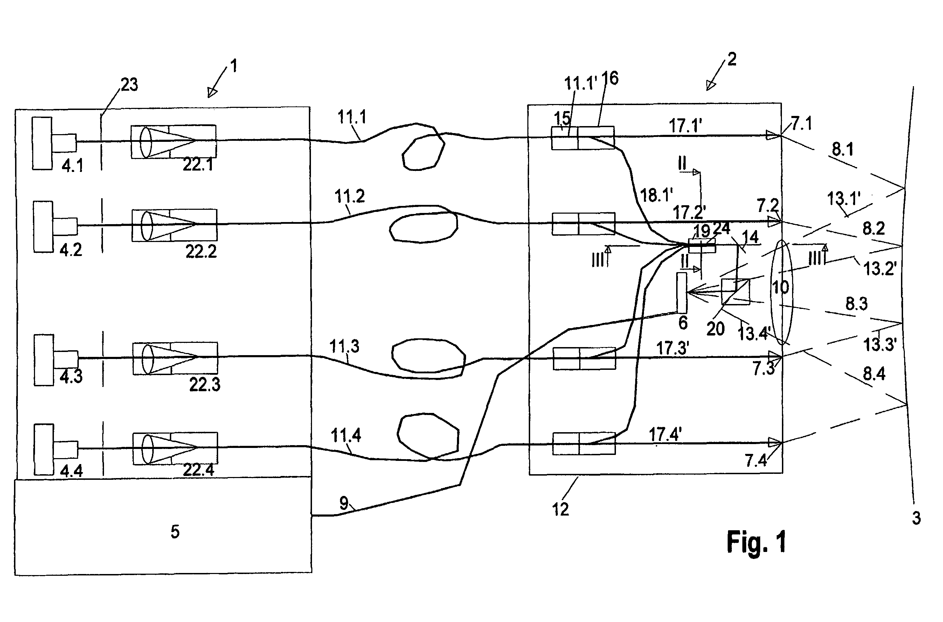

- Fig. 1: eine Prinzipdarstellung der Meßeinheit,
- Fig. 2: einen Schnitt durch die Meßeinheit entlang der Linie II-II der Fig. 1 und
- Fig. 3: einen Längsschnitt entlang der Linie III-III der Fig. 1.

Dabei besteht die Meßeinheit aus einer Basiseinheit 1 und einem Meßkopf 2, die durch lichtleitende Kabel sowie ein elektrisches Kabel 9 miteinander verbunden sind. Der Meßkopf 2 weist an seinem vorderen, gegen das Meßobjekt 3 gerichteten Ende Beleuchtungseinrichtungen 7.1 bis 7.4 auf, die jeweils einen Objektstrahl 8.1 bis 8.4 gegen das Objekt richten. Die - je nach Eigenschaften des verwendeten Lichts - zeitlich nacheinander oder gleichzeitig auf das Objekt 3 aufgebrachten Objektstrahlen werden - nach Reflektierung durch das Objekt - alle durch die gleiche Sammeloptik 10 und einen halbdurchlässigen Spiegel 20 auf die lichtempfindliche Fläche 6, in der Regel einen CCD-Sensor, geleitet.

Dabei befinden sich die Laser 4.1 bis 4.4, die die einzelnen Beleuchtungseinrichtungen 7.1 bis 7.4 des Meßkopfes 2 speisen, in der Basiseinheit 1, ebenso wie die elektronische Auswerteeinheit 5, die mit der lichtempfindlichen Fläche 6 über ein elektrisches Kabel 9 verbunden ist.

Das Licht der einzelnen Laser wird noch innerhalb der Basiseinheit 1 über jeweils eine Laseroptik 22.1 bis 22.4 in das jeweilige Glasfaserkabel 11.1 eingeleitet. Die Glasfaserkabel 11.1 sind - ebenso wie das elektrische Kabel 9 - zwischen der Basiseinheit 1 und dem Meßkopf 2 frei bewegbar, also bis zu einem bestimmten Minimalradius auch krümmbar etc., so daß der Meßkopf 2 relativ frei gehandhabt werden kann.

Erst innerhalb des Meßkopfes 2 erfolgt ein Übergang von den nicht lageempfindlichen, polarisationserhaltenden Glasfaserkabeln 11.1 bis 11.4 mittels der Splicer 15.1 bis 15.4 in die jeweiligen nicht-polarisationserhaltenden, lageempfindlichen Glasfaserkabel 11.1' bis 11.4', die weiter zu den Beleuchtungseinrichtungen 7.1 bis 7.4 geführt sind.

Spätestens ab diesem Übergang, also den Splicern 15, sind die lageempfindlichen, nicht-polarisationserhaltenden Glasfaserkabel 11' in ihrer Lage zum Meßkopf, also z. B. bezüglich des Gehäuses 12 des Meßkopfes, fixiert, so daß sie während des Gebrauchs des Meßkopfes keine Relativbewegung oder Lageveränderung bezüglich des Meßkopfgehäuses 12 bewirken können. Ebenfalls erst nach diesem Übergang, also den Splicem 15, ist jedes der Glasfaserkabel 11.1' mittels eines Kabelteilers 16 in ein Objektteilkabel 17 bzw. ein Referenzteilkabel 18 aufgeteilt. Die Referenzteilkabel 18.1 bis 18.4 sind zu einem Referenzkabel 24 zusammengeführt, in dem die einzelnen Teilkabel eng benachbart parallel zueinander liegen.

Aus dem freien Ende des Referenzkabels 24 tritt der Referenzstrahl 14 aus, der auf den halbdurchlässigen Spiegel 20 und damit ebenfalls auf die lichtempfindliche Fläche 6 geleitet und den reflektierten Objektstrahlen 13.1' bis 13.4' überlagert werden.

Auch die Referenz-Teilkabel 18.1' bis 18.4' sind in ihrer Lage gegenüber dem Gehäuse 12 des Meßkopfes fixiert, ebenso wie die lichtdurchlässige Fläche 4 sowie die optischen Elemente im Strahlengang von Referenzstrahl und Objektstrahl, insbesondere die Spiegel im Verlauf des Referenzstrahles und die Sammeloptik 10, durch die alle reflektierten Objektstrahlen zur lichtempfindlichen Fläche 6 geleitet werden.

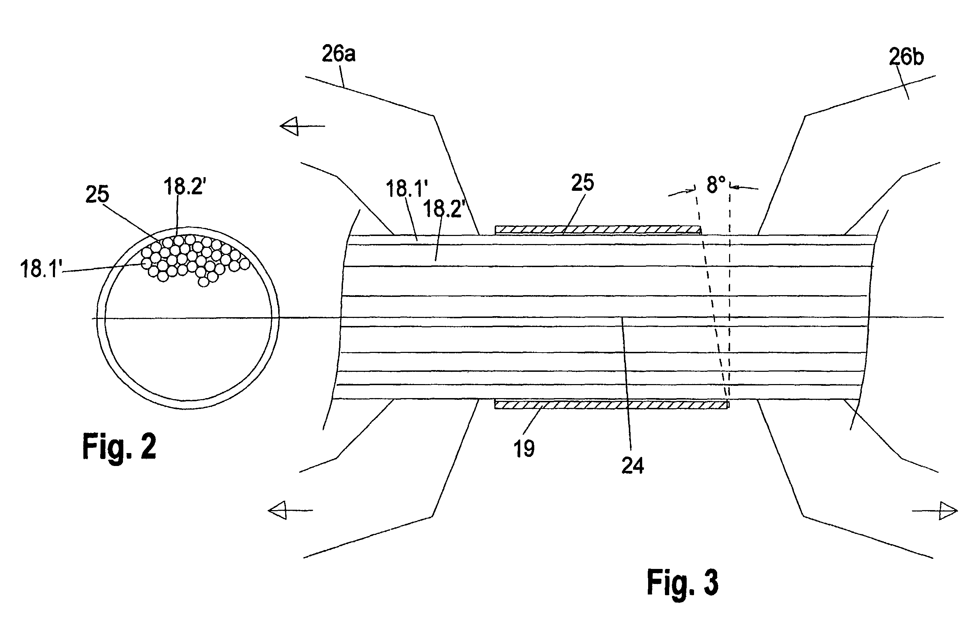

Die Figuren 2 und 3 zeigen in Querschnitt und Längsschnitt im Detail, wie die Referenz-Teilkabel mit ihren Filamenten innerhalb einer rohrförmigen Hülse 19 eng aneinander exakt parallel liegen, und der Zwischenraum sowohl zwischen den Filamenten als auch zwischen diesem Referenzkabel 24 und der außen umgebenden Hülse 19 mittels eines aushärtenden Stoffes, insbesondere Kunststoff 25, möglichst hohlraumfrei vergossen ist. Da dies zusätzlich unter Vorspannung in Längsrichtung geschieht, welche durch Ansetzen von Halteklammern 26a,b vor und hinter der Hülse 19 und Spannen des Referenzkabels 24 in seiner Längsrichtung erzeugt wird, vollzogen wird, liegen die einzelnen Filamente auch optimal parallel zueinander.

Fig. 3 zeigt in der Seitenansicht ferner, wie nach dem Aushärten das gesamte Referenzkabel 24 vorzugsweise noch im Bereich der Hülse 19 um ca. 8° schräg gekappt wird, um Rückreflexionen in das Kabel hinein zu vermeiden. Gleiches gilt für die Lichtaustritte an den Beleuchtungseinheiten 7.1 bis 7.4.

### BEZUGSZEICHENLISTE

- 1: Basiseinheit
- 2: Meßkopf
- 3: Meßobjekt
- 4: Laser
- 5: Auswerteeinheit
- 6: Lichtempfindliche Fläche
- 7: Beleuchtungseinheit
- 8.1, 8.2: Objektstrahl
- 9: Kabel
- 10: Sammeloptik
- 11: Glasfaserkabel
- 12: Meßkopf-Gehäuse
- 13: Objektstrahl
- 14: Referenzstrahl
- 15: Splicer
- 16: Kabelteiler
- 17: Objekt-Teilkabel
- 18: Referenz-Teilkabel
- 19: Hülse
- 20: Spiegel
- 21: freie Enden
- 22: Laseroptik
- 23: Blende
- 24: Referenzkabel
- 25: Kunststoff
- 26a,b: Halteklammer

## Patentansprüche

1. Meßeinheit zur Ermittlung der Form bzw. Verformung der Oberfläche eines Meßobjektes (3), insbesondere mittels Speckle-Interferometrie, mit
- einer Basiseinheit (1), welche wenigstens eine Laserdiode (4) sowie die elektronische Auswerteeinheit (5) enthält,
- einem Meßkopf (2) mit von den Laserdioden (4) gespeisten Beleuchtungseinrichtungen (7.1, 7.2, ...) zur Erzeugung von Objektstrahlen (8.1, 8.2. ...) und einer lichtempfindlichen Fläche (6) zur Registrierung der vom Objekt (3) reflektierten Objektstrahlen (8.1', 8.2', ...),
- flexiblen Lichtleitkabeln zwischen den Lasern (4) und dem Meßkopf (2) sowie
- wenigstens einem elektrischen Kabel (9) zwischen dem Meßkopf (2) und der Auswerteeinheit (5) der Basiseinheit (1),
**dadurch gekennzeichnet, daß**
- die Lichtleitkabel wenigstens zwischen dem Ausgang der Basiseinheit (1) und dem Eingang in das Gehäuse (12) des Meßkopfes (2) polarisations-erhaltende Lichtleitkabel sind
- im Meßkopf (2) die polarisationserhaltenden Lichtleitkabel in nicht-polarisationserhaltende Lichtleitkabel übergehen
- im Meßkopf (2) die nicht-polarisationserhaltenden Lichtleitkabel jeweils in ein Objekt-Teilkabel (17.1, 17.2 ...) und ein Referenz-Teilkabel (18.1, 18.2, ...) gesplittet sind und
- im Meßkopf (2) die Referenz-Teilkabel (18.1, 18.2 ...) zusammengeführt sind zur Erzeugung eines einheitlichen Referenzstrahles (14).

2. Meßeinheit nach Anspruch 1,
**dadurch gekennzeichnet, daß**
die flexiblen Lichtleitkabel Glasfaserkabel (11) sind.

3. Meßeinheit nach einem der vorhergehenden Ansprüche,
**dadurch gekennzeichnet, daß**
der Übergang zwischen den polarisationserhaltende Kabeln, insbesondere Glasfaserkabeln (11), und den nicht-polarisationserhaltenden Kabeln, insbesondere Glasfaserkabeln (11), mittels optischer Kabelverbinder, insbesondere Splicer (15), in denen die Fasern der Lichtleitkabel, insbesondere der Glasfaserkabel (11), miteinander gespleisst sind, erfolgt, und insbesondere die nicht-polarisationserhaltenden Lichtleitkabel, insbesondere Glasfaserkabel (11), stromabwärts des Splicers (15) relativ zum Gehäuse (12) des Meßkopfes (2) lagefixiert sind, insbesondere sowohl die Objekt-Teilkabel als auch die Referenz-Teilkabel (18).

4. Meßeinheit nach einem der vorhergehenden Ansprüche,
**dadurch gekennzeichnet, daß**
die Referenz-Teilkabel (18) insbesondere unmittelbar vor ihrem freien Ende (21) parallel und eng nebeneinander gelegt lagefixiert, insbesondere gegeneinander vergossen, sind, und insbesondere die freien Enden (21) der Referenz-Teilkabel (18) gemeinsam unter einem Schrägstellungswinkel von 4° bis 15°, vorzugsweise um 6° bis 9°, zu ihrer Verlaufsrichtung schräggeschnitten sind.

5. Meßeinheit nach einem der vorhergehenden Ansprüche,
**dadurch gekennzeichnet, daß**
die Referenz-Teilkabel (18), insbesondere unmittelbar vor ihren freien Enden (21.1, 21.2, ...) in einer rohrförmigen Hülse (19), insbesondere unter Vorspannung in Längsrichtung, aufgenommen sind.

6. Meßeinheit nach einem der vorhergehenden Ansprüche,
**dadurch gekennzeichnet, daß**
jede der Beleuchtungseinheiten (7.1, 7.2 ...) von einem separaten Laser (4.1, 4.2, ...) versorgt wird.

7. Meßeinheit nach einem der vorhergehenden Ansprüche,
**dadurch gekennzeichnet, daß**
der Meßkopf (2) drei Beleuchtungseinrichtungen (7.1, 7.2, 7.3) umfaßt und die Basiseinheit drei Laser (4.1, 4.2, 4.3).

8. Meßeinheit nach einem der vorhergehenden Ansprüche,
**dadurch gekennzeichnet, daß**
der Meßkopf (2) vier Beleuchtungseinrichtungen (7.1, 7.2, 7.3, 7.4) umfaßt und die Basiseinheit vier Laser (4.1, 4.2, 4.3, 4.4)

9. Meßeinheit nach einem der vorhergehenden Ansprüche,
**dadurch gekennzeichnet, daß**
in der Basiseinheit (1) zwischen dem Laser (4.1, 4.2, ...) und der Laseroptik (22.1, 22.2 ...) am Eingang des Lichtleitkabels jeweils eine Blende (23.1, 23.2, ...) zum Abschotten des Laserstrahles angeordnet ist und die Blenden (23.1, 23.2, ...) unabhängig voneinander, insbesondere von der Auswerteeinheit (5), steuerbar sind.

10. Verfahren zur Verbindung von den Referenz-Teilkabeln gemäß einem der vorhergehenden Ansprüche, zwecks Erzeugung eines einheitlichen Strahles,
**dadurch gekennzeichnet, daß**
- die Teilkabel parallel gelegt und in Längsrichtung der Kabel auf Zug beansprucht werden und
- in diesen Zustand vergossen und
- gemeinsam, insbesondere im Bereich des Vergusses, nach Aufhebung der Vorspannung am freien Ende gekappt werden, und insbesondere
- nach dem Parallellegen und Strecken und vor dem Vergießen eine Hülse (19) über alle Teilkabel gemeinsam übergeschoben wird.

11. Verfahren zur Verbindung von den Referenz-Teilkabeln gemäß einem der vorhergehenden Ansprüche, zwecks Erzeugung eines einheitlichen Strahles,
**dadurch gekennzeichnet, daß**
die aufgebrachte Vorspannung in Längsrichtung so groß ist, daß eine Durchmesserverringerung der Teilkabel und damit des Gesamtstranges eintritt.

12. Verfahren zur Verbindung von den Referenz-Teilkabeln gemäß einem der vorhergehenden Ansprüche, zwecks Erzeugung eines einheitlichen Strahles,
**dadurch gekennzeichnet, daß**
das übergeschobene Röhrchen auf dem Strang von Teilkabeln radial zur Mitte hin verpreßt wird.

## Claims

1. A measuring unit to determine the absolute configuration of the surface or a variation in the shape of an object to be measured (3) by using Speckle interferometry, with
- a base unit (1) comprising at least a laser diode (4) as well as the electronic evaluation unit (5),
- a measuring head (2) with lighting units (7.1, 7.2,...) fed by the laser diodes (4) to produce object beams (8.1, 8.2,...), and with a light-sensitive surface (6) to record the object beams (8.1', 8.2'...) reflected by the object (3),
- flexible light conducting cables between the lasers (4) and the measuring head (2) as well as
- at least on electrical cable (9) between the measuring head (2) and the evaluation unit (5) of the base unit (1), **characterised in that**
- polarisation-maintaining light conducting cables are used as light conducting cables between the outlet of the base unit (1) and the entry of the housing (12) of the measuring head (2)
- within the measuring head (2) is made a transition from the polarisation-maintaining light conducting cables to non-polarisation-maintaining light conducting cables
- each of the non-polarisation maintaining light conducting cables is split within the measuring head (2) into a partial object cable (17.1, 17.2,...) and a partial reference cable (18.1, 18.2,...) and
- the partial reference cables (18.1, 18.2,...) are brought together within the measuring head (2) to produce a unitary reference beam (14).

2. A measuring unit according to claim 1, **characterised in that** the flexible light conducting cables are optical fibre cables (11).

3. A measuring unit according to one of the preceding claims, **characterised in that** the transition from the polarisation-maintaining cables, in particular optical fibre cables (11) to the non-polarisation-maintaining cables, in particular optical fibre cables (11), is effected by way of a connecting element generally referred to as splicer (15) in which the fibres of the light conducting cables, in particular those of the polarisation maintaining optical fibres cables (11) are joined to the respective non-polarisation-maintaining light conducting cables which are fixed in their position relative to the housing (12) of the measuring head (2) after the splicer (15), in particular both the partial object cables and the partial reference cables (18).

4. A measuring unit according to one of the preceding claims, **characterised in that** the partial reference cables (18) are disposed in closely adjacently parallel relationship, in particular immediately before the free ends (21) of the cables, in particular brought together by being teemed or cast, and in particular the free ends (21) of the partial reference cables (18) are trimmed obliquely with respect to their extending direction, at an oblique positioning angle from 4° through 15°, preferably from 6° through 9°.

5. A measuring unit according to one of the preceding claims **characterised in that** the partial reference cables (18) are accommodated into a tubular sleeve (19), in particular immediately before the free ends (21.1, 21.2,...) thereof, in particular under a tensile force in the longitudinal direction thereof.

6. Measuring unit according to one of the preceding claims **characterised in that** each of the lighting units (7.1, 7.2, ...) is fed by a separate laser (4.1, 4.2, ...).

7. Measuring unit according to one of the preceding claims, **characterised in that** the measuring head (2) includes three lighting units (7.1, 7.2, 7.3), and the base unit includes three lasers (4.1, 4.2, 4,3).

8. Measuring unit according to one of the preceding claims, **characterised in that** the measuring head (2) includes four lighting units (7.1, 7.2, 7.3, 7.4), and the base unit includes four lasers (4.1, 4.2, 4.3, 4.4).

9. Measuring unit according to one of the preceding claims, **characterised in that** in the base unit (1), between the lasers (4.1, 4.2,...) and the laser optical units (22.1, 22.2,...), at the entry of the light conducting cables there are disposed shutters (23.1, 23.2,...) to cut off the laser beams, and the shutters (23.1, 23.2,...) are controlled independently of each other, in particular by the evaluation unit (5).

10. A process for connecting partial reference cables according to one of the preceding claims, for producing a unitary beam, **characterised in that**
- the partial cables are laid in parallel relationship and subjected to a tensile loading in the longitudinal direction thereof, and
- the cables are teemed **in that** condition, and
- the cables are jointly trimmed at the free ends after removal of the tensile force in the region of the teeming thereof, and in particular
- after being laid in parallel relationship and subjected to a tensile force and prior to a teeming operation, a sleeve (19) is pushed over all the cables.

11. A process for connecting partial reference cables according to one of the preceding claims, for producing a unitary beam, **characterised in that** the tensile force applied in the longitudinal direction is so great as to cause a reduction in diameter of the cables and thus the overall strand formed thereby.

12. A process for connecting partial reference cables according to one of the preceding claims, for producing a unitary beam, **characterised in that** the tube portion pushed over the assembly of partial cables is pressed radially towards the centre.

## Revendications

1. Unité de mesure pour la détermination de la forme respectivement de la déformation de la surface d'un objet à mesurer (3), spécialement par l'interférométrie Speckle, avec
- une unité de base (1) qui contient au moins une diode laser (4) aussi bien que l'unité d'évaluation électronique (5),
- une tête de mesure (2) avec des dispositifs d'illumination (7.1, 7.2,...) alimentés par les diodes laser (4) pour la génération des rayons d'objet (8.1; 8.2,...) et avec une surface photosensible (6) pour l'enregistrement des rayons d'objet (8.1', 8.2',...) réfléchis par l'objet (3),
- des câbles conducteurs de lumière flexibles entre les lasers (4) et la tête de mesure (2) aussi bien qu'
- au moins un câble électrique (9) entre la tête de mesure (2) et l'unité d'évaluation (5) de l'unité de base (1), **caractérisée en ce que**,
- les câbles conducteurs de lumière au moins entre la sortie de l'unité de base (1) et l'entrée dans le boîtier (12) de la tête de mesure (2) sont des câbles conducteurs de lumière maintenant la polarisation
- dans la tête de mesure (2) les câbles conducteurs de lumière maintenant la polarisation passent dans les câbles conducteurs de lumière non-maintenant la polarisation
- dans la tête de mesure (2) les câbles conducteurs de lumière non-maintenant la polarisation sont chacun d'eux divisé dans un câble partiel d'objet (17.1, 17.2...) et un câble partiel de référence (18.1, 18.2...) et
- dans la tête de mesure (2) les câbles partiels de référence (18.1, 18.2...) sont réunis pour la génération d'un rayon de référence unitaire (14).

2. Unité de mesure selon la revendication 1, **caractérisée en ce que**, les câbles conducteurs de lumière, flexibles sont des câbles à fibre de verre (11).

3. Unité de mesure selon l'une des revendications antérieures, **caractérisée en ce que**, le passage d'entre les câbles maintenant la polarisation, spécialement les câbles à fibre de verre (11) et les câbles non-maintenant la polarisation, spécialement les câbles à fibre de verre (11) se réalise par coupleurs optiques de câble, spécialement les pièces de collage (15) où les fibres des câbles conducteurs de lumière, spécialement des câbles à fibre de verre (11) sont couplées ensemble et spécialement les câbles conducteurs de lumière non-maintenant la polarisation, spécialement des câbles à fibre de verre (11) après la pièce de collage (15) sont fixés dans leur position par rapport au boîtier (12) de la tête de mesure (2), spécialement tant les câbles partiels d'objet que les câbles partiels de référence (18).

4. Unité de mesure selon l'une des revendications antérieures, **caractérisée en ce que**, les câbles partiels de référence (18) sont fixés en positions parallèles et étroitement collés, spécialement de manière directe avant des bouts libres (21) de ceux-ci, spécialement fixés ensemble par coulage et spécialement les bouts libres (21) des câbles de référence (18) sont coupés ensemble, obliquement par rapport à leur direction de déroulement sous un angle de positionnement oblique de 4° à 15°, de préférence de 6° à 9°.

5. Unité de mesure selon l'une des revendications antérieures, **caractérisée en ce que**, les câbles partiels de référence (18) sont introduits dans un manchon (19) tubulaire, spécialement de manière directe avant des bouts libres (21.1, 21.2,...) de ceux-ci, spécialement par précontrainte en direction longitudinale.

6. Unité de mesure selon l'une des revendications antérieures, **caractérisée en ce que**, chacune d'entre les unités d'illumination (7.1, 7.2,...) est alimentée d'un laser (4.1, 4.2,...) distinct.

7. Unité de mesure selon l'une des revendications antérieures, **caractérisée en ce que**, la tête de mesure (2) comprend trois dispositifs d'illumination (7.1, 7.2, 7.3) et l'unité de base trois lasers (4.1; 4.2; 4.3).

8. Unité de mesure selon l'une des revendications antérieures, **caractérisée en ce que**, la tête de mesure (2) comprend quatre dispositifs d'illumination (7.1, 7.2, 7.3, 7.4) et l'unité de base quatre lasers (4.1, 4.2, 4.3, 4.4).

9. Unité de mesure selon l'une des revendications antérieures, **caractérisée en ce que**, dans l'unité de base (1) entre les lasers (4.1, 4.2,...) et les éléments optiques laser (22.1, 22.2,...) à l'entrée des câbles conducteurs de lumière est disposé à raison d'un obturateur (23.1, 23.2,...) pour l'obturation du rayon laser et les obturateurs (23.1, 23.2,...) sont commandés indépendamment l'un de l'autre, spécialement par l'unité d'évaluation (5).

10. Procédé pour la jonction des câbles de référence partiels selon l'une des revendications antérieures, dans le but de la génération d'un rayon unitaire, **caractérisé en ce que**,
- les câbles partiels sont assis parallèlement et sollicités à l'extension dans la direction longitudinale des câbles, et
- dans cet état sont fixés par coulage, et
- après l'interruption de la précontrainte sont coupés ensemble les bouts libres, spécialement dans la zone de coulage et spécialement
- après la position parallèle et l'extension et avant de coulage on tire un manchon (19) sur tous les câbles partiels joints.

11. Procédé pour la jonction des câbles de référence partiels selon l'une des revendications antérieures, dans le but de la génération d'un rayon unitaire, **caractérisé en ce que**, la précontrainte appliquée dans la direction longitudinale est si grande qu'on produit une diminution en diamètre des câbles partiels et par cela de tout le joint.

12. Procédé pour la jonction des câbles de référence partiels selon l'une des revendications antérieures, dans le but de la génération d'un rayon unitaire, **caractérisé en ce que**, le petit tube tiré sur le joint de câbles partiels est pressé dans la direction radiale vers le centre.
